# EUROPEAN PATENT APPLICATION

(11) **EP 4 760 425 A1**
(43) Date of publication of application: **17.06.2026**
(21) Application number: 24275135.2
(22) Date of filing: 12.12.2024
(51) Int. Cl.: G05B 19/418, B23P 23/06

(54) **MATERIAL PROCESSING SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A material processing system (100) comprising a control system (200) and a material element identification marking system (300). The control system (200) is operable to receive a part request instruction (202). In dependence of the part request instruction (202), the control system (200) is operable to: determine a region (208) of a material element (206) which will form the part (204), and control the material element identification marking system (300) to perform a marking operation configured to apply an identifier (302) to the region which will form the part (204).

## Description

### FIELD

The present disclosure relates to a material processing system.

### BACKGROUND

It is common to construct assemblies by joining parts cut from a sheet or plate of material.

In some fields, for example in ship building or other large structures, it may be that a large number of parts, of the same and/or different geometries, sizes and material(s), are required.

In some manufacturing fields (for example in automobile manufacturing) the final number of finished assemblies is very high, and hence the number of sets of parts needed for each finished assembly (e.g. an automobile) is large. However, in other fields (e.g. ship building) the finished assemblies (e.g. ships) are not mass produced, and hence the number of sets of parts to create for each finished assembly may be relatively small. For this reason, the parts are produced using manual material handling and cutting techniques as an investment in multiple conventional production lines for each part type would be too great and too wasteful for the total number of parts which are to be produced. However, producing the parts manually is labour intensive, is prone to human error and increases the risk of injury to those doing the work (for example handling the materials and operating cutting equipment).

Hence a material processing system capable of the creation of parts for a fabricated/assembled structure which reduces the amount of human intervention required to produce the parts is highly desirable.

### SUMMARY

According to the present disclosure there is provided an apparatus and system as set forth in the appended claims. Other features of the invention will be apparent from the dependent claims, and the description which follows.

Accordingly there may be provided a material processing system (100). The material processing system (100) may comprise a control system (200). The material processing system (100) may comprise a material element identification marking system (300). The control system (200) may be operable to receive a part request instruction (202).

In dependence of the part request instruction (202), the control system (200) may be operable to determine a region (208) of a material element (206) which will form the part (204).

In dependence of the part request instruction (202), the control system (200) may be operable to control the material element identification marking system (300) to perform a marking operation configured to apply an identifier (302) to the region which will form the part (204).

The part request instruction (202) may define a geometry of a plurality of parts (204) to be cut from a material element (206), wherein each part may be substantially identical, or at least one part may differ from the remainder of the plurality of parts (204).

In dependence of the part request instruction (202), the control system (200) may be operable to determine a region (208) of the material element (206) for each of the respective parts (204) to be formed from, such that each region (208) corresponds to a different part (204).

In dependence of the part request instruction (202), the control system (200) may be operable to control the material element identification marking system (300) to perform a marking operation configured to apply an identifier (302) to each region (208).

The material processing system (100) may further comprise a material cutting tool (400). The control system (200) may be operable to control the material cutting tool (400) to perform a cutting operation configured to cut the or each part (204) from the material element (206) so that the respective identifier (302) is present on the respective part (204).

The material processing system (100) may further comprise a part finishing tool (500), wherein, in dependence of the part request instruction (202), the control system (200) may be operable to control the part finishing tool (500) to perform a finishing operation on the or each part (204) so that the identifier is present on the or each part (204) after the finishing operation.

The material processing system (100) may comprise a material element delivery system (600).

The material processing system (100) may comprise a marking station (700), wherein the material element identification marking system (300) is located at the marking station (700).

The material processing system (100) may comprise a cutting station (710), wherein the cutting tool (400) may be provided at the cutting station (710).

The material processing system (100) may comprise a material element transport system (720) for moving the material element (206) from the material element delivery system (600) to the marking station (700), and from the marking station (700) to the cutting station (710).

The material processing system (100) may comprise a finishing station (730), wherein the part finishing tool (500) may be provided at the finishing station (730).

The material processing system (100) may comprise a part transport system (740) for moving the or each part (204) cut from the material element (206) to the finishing station (730) along a part transport path (750).

The material element delivery system (600) may be configured to store a plurality of material elements (206) at the same time.

In dependence of the part request instruction (202), the control system (200) may be operable to determine which material element (206) of the plurality of material elements (206) to be used to produce the or each part (204).

A material processing system (100) wherein the control system (200) may be operable to control the material element identification marking system (300) to perform a marking operation configured to apply an identifier (302) to a first side (210) and a second side (220) of the region which will form the or each part (204).

The material element identification marking system (300) may comprise a first material element identification marking unit (310) for marking operations at the marking station (700).

The material element identification marking system (300) may comprise a second material element identification marking unit (320) provided at the cutting station (710), at the finishing station (730), or at a position on the part transport path (750) between the cutting station (710) and the finishing station (730).

The control system (200) may be operable to control the second material element identification marking unit (320) to perform a marking operation after the cutting operation and before the finishing operation.

The control system (200) may be operable to control the material element identification marking system (300) to perform a marking operation configured to apply an identifier (302) to a location on the respective part (204) which corresponds to the centre of gravity of the respective part (204).

The identifier (302) may be a machine readable code which records a part dataset (800) comprising a description of the respective part (204), machine readable instructions, part number, build number which the respective part (204) is associated with, material composition of the respective part (204), and/or at least one dimension of the respective part (204).

The identifier (302) may be a machine readable code which records a database reference in which is stored a part dataset comprising a description of the respective part (204), machine readable instructions part number, build number which the respective part (204) is associated with, material composition of the respective part (204), and/or at least one dimension of the respective part (204).

The control system (200) may be operable to determine the position on the material element (206) that a part (204) will be cut from.

There may be provided a method of operation of a material processing system (100). The material processing system (100) may comprise a control system (200). The material processing system (100) may comprise a material element identification marking system (300).

The method of operation may comprise the step of the control system (200) receiving a part request instruction (202) and in dependence of the part request instruction (202), the control system (200) is operable to determine a region (208) of a material element (206) which will form a part (204).

The method of operation may comprise the step of the control system (200) controlling the material element identification marking system (300) to perform a marking operation configured to apply an identifier (302) to the region which will form the part (204).

The part request instruction (202) may define a geometry of a plurality of parts (204) to be cut from a material element (206), wherein each part may be substantially identical or at least one part may differ from the remainder of the plurality of parts (204).

In dependence of the part request instruction (202), the control system (200) determines a region (208) of the material element (206) for each of the respective parts (204) to be formed from, such that each region (208) corresponds to a different part (204).

In dependence of the part request instruction (202), the control system (200) controls the material element identification marking system (300) to perform a marking operation configured to apply an identifier (302) to each region (208).

The material processing system (100) may comprise a material cutting tool (400).

The material processing system (100) may comprise a part finishing tool (500).

In dependence of the part request instruction (202), the control system (200) may control the part finishing tool (500) to perform a finishing operation on the or each part (204).

In dependence of the part request instruction (202), the control system (200) may control the material cutting tool (400) to perform a cutting operation configured to cut the or each part (204) from the material element (206) so that the respective identifier is present on the respective part (204).

The material processing system (100) may comprise a material element delivery system (600).

The material processing system (100) may comprise a marking station (700), wherein the material element identification marking system (300) is located at the marking station (700).

The material processing system (100) may comprise a cutting station (710), wherein the cutting tool (400) is provided at the cutting station (710).

The material processing system (100) may comprise a finishing station (730), wherein the part finishing tool (500) is provided at the finishing station (730).

The material processing system (100) may comprise a material element transport system (720).

The material processing system (100) may comprise a part transport system (740).

The method may comprise the step of the control system controlling the material element transport system (720) to move the material element from the material element delivery system (600) to the marking station (700).

The method may comprise the step of the control system controlling the material element transport system (720) to move the material element (206) from the marking station (700) to the cutting station (710).

The method may comprise the step of the control system controlling the part transport system (740) to move the or each part (204) cut from the material element (206) to the finishing station (730).

The material element delivery system (600) may be configured to store a plurality of material elements (206) at the same time.

The method may comprise the step of, in dependence of the part request instruction (202), the control system (200) determining which material element (206) of the plurality of material elements (206) to be used to produce the or each part (204).

Hence there may be provided a material processing system capable of the creation of parts for a fabricated/assembled structure which reduces the amount of human intervention required to produce the parts.

### BRIEF DESCRIPTION OF THE FIGURES

Embodiments of the invention will now be described by way of example only with reference to the figures, in which:
Figure 1 illustrates a perspective view of a material processing system 100 according to the present disclosure; and
Figure 2 illustrates a diagrammatic representation of a plan view of the material processing system according to the present disclosure.

### DETAILED DESCRIPTION

The present disclosure relates to a material processing system 100. The present disclosure relates to a method of operation of a material processing system 100. The present disclosure relates to a material processing system 100 (and method of operation of a material processing system 100) configured for the creation of parts from a material element 206. The material element 206 may be a sheet of material or a plate of material (e.g. metal). The present disclosure relates to an automated material processing system 100. The present disclosure relates to an automated method of operation of a material processing system 100. The present disclosure relates to a material processing system 100 (and method of operation of a material processing system 100) configured for the creation of parts from a sheet/plate material (e.g. metal) source. The parts created by the material processing system 100 (and method of operation of a material processing system 100) may be for the fabrication of large structures, for example for shipbuilding, for example watercraft, water vessels and other structures which require a large number of parts, but which are not mass produced items.

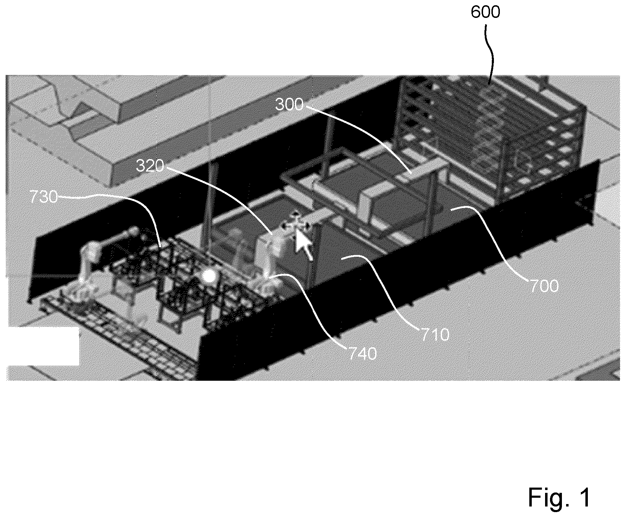

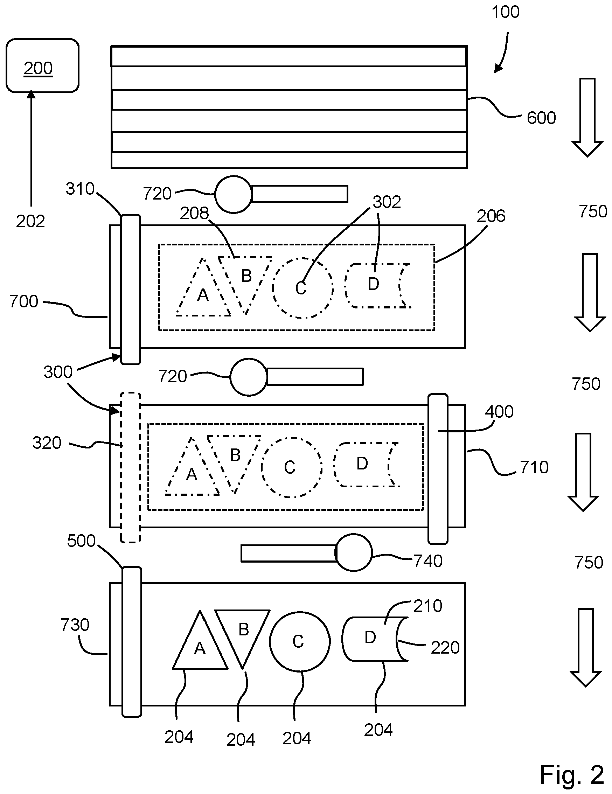

Figure 1 illustrates a perspective view of a material processing system 100 according to the present disclosure. Figure 2 illustrates a diagrammatic representation of a plan view of the material processing system according to the present disclosure.

As illustrated in the figures, the material processing system 100 may comprise a control system 200 (e.g. a computer) and a material element identification marking system 300.

The material processing system 100 may further comprise a marking station 700, wherein at least part of the material element identification marking system 300 is located at the marking station 700.

The material element identification marking system 300 may comprise any appropriate marking unit 310, 320 operable to deliver/create an indicator/identifier 302 to a material element 206 (e.g. a sheet of material or a plate of material).

In some examples, the material element identification marking system 300 may be operable to generate an identifier 302 (e.g. a mark) on the material element 206 using ink. The ink may be machine readable (i.e. visible using a machine vision system). The ink may be ultraviolet ink.

In some examples, the material element identification marking system 300 may be operable to generate an identifier 302 (e.g. a mark) on the material element 206 using a laser marking system. For example the laser marking system may be operable to engrave (e.g. produce an indented region), etch (e.g. creating a raised surface), anneal (e.g. causing colour changes without removing material), foam (e.g. create gas bubbles in the material, resulting in raised, light-coloured marks) and/or discolour (e.g. removing a surface layer to reveal a different colour underneath) the material element 206.

The control system 200 may be operable to receive a part request instruction 202. For example, the control system 200 may be operable to receive a part request instruction 202 from a user (e.g. via a user interface) and/or from a further computer/control system.

The part request instruction 202 may define a geometry of a part 204 or parts 204 to be cut from a material element 206. The material element 206 may be provided as a sheet or a plate (where, by way of non-limiting example, a plate material is thicker than a sheet material). The material element 206 may be flat. The material element may be made from or comprise metal or a metallic alloy.

In dependence of the part request instruction 202, the control system 200 may be operable to determine a region 208 of a material element 206 which will form the part 204.

In dependence of the part request instruction 202, the control system 200 may be operable to control a material element identification marking unit 310, 320 of the material element identification marking system 300 to perform a marking operation. The marking operation may be configured to apply an identifier 302 to the region which will form the part 204.

The part request instruction 202 may define a geometry of a plurality of parts 204 to be cut from a material element 206. Each part may be substantially identical to the others being cut from the same material element 206. At least one part may differ from the remainder of the plurality of parts 204 being cut from the same material element 206. Each of the parts may have a different size and/or geometry to the others being cut from the same material element 206.

The control system 200 may be operable to determine the position on a material element 206 that a part 204 will be cut from. In dependence of the part request instruction 202, the control system 200 may be operable to determine a region 208 of the material element 206 for each of the respective parts 204 to be formed from, such that each of the regions 208 of the material element 206 corresponds to a different part 204. That is to say, in dependence of the part request instruction 202, the control system 200 may be operable to define which region or regions of the material element 206 will be cut from the material element. In dependence of the part request instruction 202, the control system 200 may be operable to define the spacing of each part from every other part being cut from the material element 206. This pattern of parts 204 to be cut from the material element 206 may be termed a nesting arrangement.

In dependence of the part request instruction 202, the control system 200 may be operable to control the material element identification marking system 300 to perform a marking operation configured to apply an identifier 302 to each region 208. That is to say, in dependence of the part request instruction 202, the control system 200 may be operable to control the material element identification marking system 300 to perform a marking operation configured to apply an identifier 302 to each region 208 before the part 204 is cut from the material element 206.

The material processing system 100 may further comprise a material cutting tool 400. The material processing system 100 may further comprise a cutting station 710, wherein the cutting tool 400 is provided at the cutting station 710.

The control system 200 may be operable to control the material cutting tool 400 to perform a cutting operation configured to cut the or each part 204 from the material element 206 so that the respective identifier is present on the respective part 204. That is to say, the control system 200 may be operable to control the material cutting tool 400 to perform the cutting operation to produce the or each part 204 from the material element 206 so that the respective identifier 302 is present on the respective part 204 after it has been cut from the material element 206. Put another way, the control system 200 may be operable to control the material cutting tool 400 to perform the cutting operation around and/or spaced apart from the respective identifier 302 so that the identifier 302 is present on the respective part 204 at the conclusion of the cutting operation.

The material processing system 100 may further comprise a part finishing tool 500. The material processing system 100 may further comprise a finishing station 730, wherein the part finishing tool 500 is provided at the finishing station 730.

In dependence of the part request instruction 202, the control system 200 may be operable to control the part finishing tool 500 to perform a finishing operation on the or each part 204 so that the identifier 302 is present on the or each part 204 after the finishing operation. Put another way, the control system 200 may be operable to control the part finishing tool 500 to perform the finishing operation around and/or spaced apart from the respective identifier 302 so that the identifier 302 is present on the respective part 204 at the conclusion of the finishing operation.

The finishing operation may comprise removing material from the edge of the part 204, for example to add a radius and/or bevel to and edge of the part 204.

The material processing system 100 may further comprise a material element delivery system 600. The material element delivery system 600 may be configured to receive and/or store one or more material elements 206 (e.g. plates or sheets) from a storage rack.

The material element delivery system 600 may be configured to store a plurality of material elements 206 at the same time. In dependence of the part request instruction 202, the control system 200 is operable to determine which material element 206 of the plurality of material elements 206 is to be used to produce the or each part 204.

In an example in which the material element delivery system 600 is configured to store a plurality of material elements 206 at the same time, all of the plurality of elements 206 may be of the same size (e.g. of the same length, breadth, thickness), weight or material type as the other material elements 206.

In an example in which the material element delivery system 600 is configured to store a plurality of material elements 206 at the same time, at least some of the plurality of elements 206 may be of a different size (e.g. have a different length, breadth and/or thickness), weight or material type to the other of the plurality of material elements 206.

In an example in which the material element delivery system 600 is configured to store a plurality of material elements 206 at the same time, each of the plurality of material elements 206 may be of a different size (e.g. have a different length, breadth and/or thickness), weight or material type to each of the other plurality of material elements 206.

In an example in which the material element delivery system 600 is configured to store a plurality of material elements 206 at the same time, all of the plurality of material elements 206 may be complete (i.e. uncut).

In an example in which the material element delivery system 600 is configured to store a plurality of material elements 206 at the same time, at least some of the plurality of material elements 206 may be complete (i.e. uncut) and some may already have had parts 204 cut from them.

In an example in which the material element delivery system 600 is configured to store a plurality of material elements 206 at the same time, all of the plurality of material elements 206 may already have had parts 204 cut from them.

In dependence of the part request instruction 202, the control system 200 is operable to determine which material element 206 of the plurality of material elements 206 is to be used to produce the or each part 204.

The material processing system 100 may further comprise a material element transport system 720 for moving the material element 206 from the material element delivery system 600 to the marking station 700, and from the marking station 700 to the cutting station 710.

The material element transport system 720 may comprise at least one crane and/or at least one robot operable to connect to, lift, move/carry and disconnect from the material element 206 to thereby move the material element 206 from the material element delivery system 600 to the marking station 700. In an example in which the material element 206 is made from magnetic material, the material element transport system 720 may comprise at least one crane or at least one robot with a magnetic coupling configured for connecting to, lifting, moving/carrying and disconnecting from the material element 206 to move it from the material element delivery system 600 to the marking station 700. The material element transport system 720 may comprise a vision system which it is operable to generate material element position data, and to locate a material element 206, couple to a material element 206, engage with a material element 206, lift a material element 206, move a material element 206, flip over a material element 206 and/or orientate a material element 206 in response to the position data.

The material processing system 100 may further comprise a part transport system 740. The part transport system 740 may be configured for moving the or each part 204 cut from the material element 206 to the finishing station 730 along a part transport path 750. That is to say, the part transport system 740 may be configured for moving the or each part 204 from the cutting station 710 to the finishing station 730 along a part transport path 750.

The part transport system 740 may be provided as a pick and place system (for example a robotic arm with a suitable coupling for fixing to the parts). The part transport system 740 may be configured for moving individual parts from one station to another, placing each part in the correction location for the next operation, turning over the parts if required. The part transport system 740 may comprise a robot arm operable to couple to individual parts so as to move them from one station to another, placing each part in the correct location for the next operation, turning over the parts if required. The part transport system 740 may comprise a vision system which it is operable to generate part position data, and to locate a part, couple to a part, engage with a part, lift a part, move a part, flip over a part and/or orientate a part in response to the position data.

In the figures, the position and form of the material element transport system 720 and the part transport system 740 are shown diagrammatically, with details of their configuration not shown. They may have a different configuration and location relative to each of the stations 700, 710, 730, and relative to each other, to that shown in the figures.

The part transport path 750 is illustrated in figure 2, extending from the material element delivery system 600 to, and including each of, the stations 700, 710, 730 where provided.

Hence in the example of figure 2, the part transport path 750 extends from the material element delivery system 600, to the marking station 700, the cutting station 710 and the finishing station 730. Hence, in some examples, the material element delivery system 600, the marking station 700, the cutting station 710 and the finishing station 730 may be provided in series along the part transport path 750. In some examples, and as shown in figure 2, the material element delivery system 600, the marking station 700, the cutting station 710 and the finishing station 730 may be spaced apart from one another along the part transport path 750.

In some examples, the material element delivery system 600, the marking station 700, the cutting station 710 and the finishing station 730 may be spaced apart from one another along the part transport path 750 by at most 1 to 5 metres.

The material element transport system 720 may be operable to return the material element 206 to the material element delivery system 600 from the cutting station 710 after the cutting process has been completed.

The control system 200 may be operable to control the material element identification marking system 300 to perform a marking operation configured to apply an identifier 302 to a first side 210 and a second side 220 of the region which will form the or each part 204. In such an example, the first side 210 and the second side 220 of the region may be on opposite faces (e.g. the two largest faces) of the material element 206.

The material element identification marking system 300 may comprise a first material element identification marking unit 310 for marking operations at the marking station 700.

The material element identification marking system 300 may comprise a second material element identification marking unit 320 provided at the cutting station 710, at the finishing station 730, or at a position on the part transport path 750 between the cutting station 710 and the finishing station 730 for marking operations.

The control system 200 may be operable to control the second material element identification marking unit 320 to perform a marking operation after the cutting operation and before the finishing operation.

The first material element identification marking unit 310 may be configured to perform a marking operation to apply an identifier 302 to the first side 210 of the or each part 204. In examples where present, the second material element identification marking unit 320 may be configured to perform a marking operation to apply an identifier 302 to the second side 220 of the or each part. In examples where present, the second material element identification marking unit 320 may be configured to perform a marking operation to apply an identifier 302 to one or more part 204. The identifier 302 applied to the first side 210 may be the same as the identifier 302 applied to the second side 220.

The provision of an identifier 302 on the first side 210 of the part 204 and on the second side 220 of the part 204 ensures that whichever way up the part 204 is, an identifier 302 may be visible, hence enabling any equipment which is dependent on reading the identifier 302 to be able to perform the required function to that part 204.

The control system 200 may be operable to control the material element identification marking system 300 to perform a marking operation configured to apply an identifier 302 to a location on the respective part 204 which corresponds to the centre of gravity of the respective part 204. The identifier 302 thereby acts as a target for the part transport system 740 (e.g. magnetic coupling of a crane) to engage and lock onto the part 204 so the part is balanced when lifted. Hence the part transport system 740 is operable to identify the identifier 302 and connect its lifting coupling with the part at the location of the identifier (e.g. couple to the region of the part covered by the identifier).

The identifier 302 may be a machine readable code. By way of non limiting example, the machine readable code may be a data matrix, two dimensional bar code or QR code. The machine readable code may record a part dataset 800 comprising a description of the respective part 204, machine readable instructions (for example to be read and processed by the cutting tool 400 and/or part finishing tool 500), part number, build number, any appropriate type manufacturing data which the respective part 204 is associated with, material composition of the respective part 204, and/or at least one dimension of the respective part 204 (for example thickness).

The identifier 302 may be a machine readable code which records a database reference (for example a hyperlink) in which is stored a part dataset 800 comprising a description of the respective part 204, machine readable instructions (for example to be read and processed by the cutting tool 400 and/or part finishing tool 500), part number, build number, any appropriate type manufacturing data which the respective part 204 is associated with, material composition of the respective part 204, and/or at least one dimension of the respective part 204 (for example thickness).

The identifier 302 may be different for each part (for example if the parts are different to one another). The identifier 302 may be the same for each part (for example if the parts are the same as one another).

The material cutting tool 400 may comprise any suitable equipment for cutting the material element. For example, the material cutting cool 400 may comprise a water jet cutting apparatus 402. The material cutting cool 400 may comprise a mechanical cutting tool (for example a saw). The material cutting cool 400 may comprise a thermal cutting tool (for example a laser or plasma torch).

The material cutting tool 400 may be operable to read the identifier 302 and perform a cutting operation in dependence of the identifier 302. The material cutting tool 400 may be operable to read the identifier 302 and perform a cutting operation in dependence of data/instructions obtained as a result of reading the identifier 302.

The part finishing tool 500 may be operable to read the identifier 302 and perform a finishing operation in dependence of the identifier 302. The part finishing tool 500 may be operable to read the identifier 302 and perform a finishing operation in dependence of data/instructions obtained as a result of reading the identifier 302.

The part transport system 740 may be operable to read the identifier 302 on a part and perform a transport operation on the part (e.g. move and/or re-orientate the part) in dependence of the identifier 302. The part transport system 740 may be operable to read the identifier 302 on a part and perform a transport operation on the part (e.g. move and/or re-orientate the part) in dependence of data/instructions obtained as a result of reading the identifier 302.

Since the or each identifier 302 is generated in dependence of the part request instruction 202, any operation carried out by the material cutting tool 400, part finishing tool 500 and/or part transport system 740 is in dependence of the part request instruction 202.

There may be provided a method of operation of a material processing system 100. For example there may be provided a method of operation of the material processing system 100 comprising the control system 200 and the material element identification marking system 300.

The method of operation may comprise the steps of the control system 200 receiving a part request instruction 202. In dependence of the part request instruction 202, the control system 200 may be operable to determine a region 208 of a material element 206 which will form a part 204.

The method of operation may comprise the steps of controlling the material element identification marking system 300 to perform a marking operation configured to apply an identifier 302 to the region which will form the part 204.

The method may comprise the step of, in dependence of the part request instruction 202, the control system 200 determining which material element 206 of a plurality of material elements 206 to be used to produce the or each part 204.

In dependence of the part request instruction 202, the control system 200 may determine a region 208 of the material element 206 for each of the respective parts 204 to be formed from, such that each region 208 corresponds to a different part 204.

In dependence of the part request instruction 202, the control system 200 may determine a region 208 of the material element 206, chosen from a plurality of material elements 206, for each of the respective parts 204 to be formed from, such that each region 208 corresponds to a different part 204.

The method may comprise the step of the control system controlling the material element transport system 720 to move the material element from the material element delivery system 600 to the marking station 700.

In dependence of the part request instruction 202, the control system 200 may control the material element identification marking system 300 to perform a marking operation configured to apply an identifier 302 to the or each region 208.

The method may comprise the step of the control system controlling the material element transport system 720 to move the material element 206 from the marking station 700 to the cutting station 710.

In dependence of the part request instruction 202, the control system 200 may control the material cutting tool 400 to perform a cutting operation configured to cut the or each part 204 from the material element 206 so that the respective identifier is present on the respective part 204.

The method may comprise the step of the control system controlling the material element transport system 720 to return the material element 206 to the material element delivery system 600 from the cutting station 710 after the cutting process has been completed (for example so the material element 206 may be used to create a further part).

The method may comprise the step of the control system controlling the part transport system 740 to move the or each part 204 cut from the material element 206 to the finishing station 730.

In dependence of the part request instruction 202, the control system 200 may control the part finishing tool 500 to perform a finishing operation on the or each part 204 so that the identifier is present on the or each part 204 after the finishing operation.

Hence there may be provided a material processing system capable of the creation of parts for a fabricated/assembled structure which reduces the amount of human intervention required to produce the parts.

The provision of the marking operation to place an identifier 302 on the material element 206 prior to cutting a part, and producing the part so that the identifier is still readable at the conclusion to the creation of the part 204, enables the part to be made to the required design (e.g. cut and finished) and allows for the part to continue to be identifiable after the part has left the material processing system so that it can be assembled/located/joined in the correct location in the assembly to which it is being added.

The material processing system 100 is configured to make parts of any shape/design from a material element 206. This is enabled by the incorporation of a control system 200 which orchestrates the creation of parts from a material element using equipment which is inherently adaptable (e.g. operable to produce any practical geometry). Consequentially the material processing system 100 of the present disclosure is not limited to the manufacture of a fixed range of designs, and hence may be used to create parts for any fabrication/assembly, as required.

This is because the machinery of the system is operable to move and process each part as required by performing the operations required on a particular part which may be the same or different to operations on another part. Using the identifier 302 to mark the centre of gravity of a part also enables equipment (e.g. robots) to use the identifier 302 as a target for picking up the part to ensure that the part is balanced while being moved, meaning its motion is more predictable, and it may be more reliably locked onto and positioned.

Since the material processing system and method of operation of the present disclosure reduce the amount of manual steps to produce a part, they will consistently produce high quality parts to the required standard. By way of example, it is estimated that the configuration of the system will produce high quality parts to the required standard at about two to three times the speed/rate of an equivalent conventional process.

Additionally the system may be provided as a modular manufacturing unit (for example in modular cell) which may be duplicated in locations in the same of different manufacturing spaces as required.

The combination of the stations of the system 100 enables the minimising of space used for the system.

A water jet cutting apparatus 402 may be especially advantageous as the material cutting tool 400 in an automated system according to the present disclosure. For example the use of a water jet cutting apparatus 402 may be more accurate and more consistent when compared to those cut thermally using a thermal process. Additionally use of a water jet cutting apparatus 402 avoids detrimental hardening effects imparted on material cut from a metal plate or sheet which may be formed using a thermal process and would need to be removed, thus avoiding material wastage and extra material processing steps.

Additionally use of a water jet cutting apparatus 402 may enable a desired feature to be provided on the parts cut from the plate/sheet during the cutting process such as a bevel (for example, as required for some welding techniques welding) or radii (for example required to remove sharp edges to avoid risk of injury to users, avoid damage to the parts on their edges and/or to provide a geometry which is easier to coat and finish). This avoids the need for an additional material removal process after cutting, saving further processing time, reducing the amount of equipment needed, and hence also the amount of space needed for the system 100.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A material processing system comprising:
a control system;
a material element identification marking system;
wherein the control system is operable to receive a part request instruction; and
in dependence of the part request instruction, the control system is operable to:
determine a region of a material element which will form the part;
control the material element identification marking system to perform a marking operation configured to apply an identifier to the region which will form the part.

2. A material processing system as claimed in claim 1 wherein the part request instruction defines a geometry of a plurality of parts to be cut from a material element, wherein each part may be substantially identical, or at least one part may differ from the remainder of the plurality of parts; and
in dependence of the part request instruction, the control system is operable to:
determine a region of the material element for each of the respective parts to be formed from, such that each region corresponds to a different part;
control the material element identification marking system to perform a marking operation configured to apply an identifier to each region.

3. A material processing system as claimed in claim 1 or claim 2 further comprising a material cutting tool;
wherein the control system is operable to control the material cutting tool to perform a cutting operation configured to cut the or each part from the material element so that the respective identifier is present on the respective part.

4. A material processing system as claimed in claim 3 further comprising a part finishing tool, wherein, in dependence of the part request instruction, the control system is operable to control the part finishing tool to perform a finishing operation on the or each part so that the identifier is present on the or each part after the finishing operation.

5. A material processing system as claimed in claim 4 further comprising:
a material element delivery system;
a marking station, wherein the material element identification marking system is located at the marking station;
a cutting station, wherein the cutting tool is provided at the cutting station;
a material element transport system for moving the material element from the material element delivery system to the marking station, and from the marking station to the cutting station;
a finishing station, wherein the part finishing tool is provided at the finishing station;
a part transport system for moving the or each part cut from the material element to the finishing station along a part transport path.

6. A material processing system as claimed in 5 wherein:
the material element delivery system is configured to store a plurality of material elements at the same time, and
in dependence of the part request instruction, the control system is operable to determine which material element of the plurality of material elements to be used to produce the or each part.

7. A material processing system as claimed in any one of claims 4 to 6 wherein the control system is operable to control the material element identification marking system to perform a marking operation configured to apply an identifier to a first side and a second side of the region which will form the or each part;
wherein the material element identification marking system comprises:
a first material element identification marking unit for marking operations at the marking station; and/or
a second material element identification marking unit provided at the cutting station, at the finishing station, or at a position on the part transport path between the cutting station and the finishing station;
wherein the control system is operable to control the second material element identification marking unit to perform a marking operation after the cutting operation and before the finishing operation.

8. A material processing system as claimed in any one of the preceding claims wherein the control system is operable to control the material element identification marking system to perform a marking operation configured to apply an identifier to a location on the respective part which corresponds to the centre of gravity of the respective part.

9. A material processing system as claimed in any one of the preceding claims wherein the identifier is a machine readable code which:
records a part dataset comprising a description of the respective part, machine readable instructions, part number, build number which the respective part is associated with, material composition of the respective part, and/or at least one dimension of the respective part;
and/or
records a database reference in which is stored a part dataset comprising a description of the respective part, machine readable instructions part number, build number which the respective part is associated with, material composition of the respective part, and/or at least one dimension of the respective part.

10. A material processing system as claimed in any one of the preceding claims wherein the control system is operable to determine the position on the material element that a part will be cut from.

11. A method of operation of a material processing system, the material processing system comprising:
a control system, a material element identification marking system;
the method of operation comprising the steps of the control system:
receiving a part request instruction and in dependence of the part request instruction, the control system is operable to determine a region of a material element which will form a part;
controlling the material element identification marking system to perform a marking operation configured to apply an identifier to the region which will form the part.

12. A method as claimed in claim 11 wherein:
the part request instruction defines a geometry of a plurality of parts to be cut from a material element, wherein each part may be substantially identical or at least one part may differ from the remainder of the plurality of parts; and
in dependence of the part request instruction, the control system:
determines a region of the material element for each of the respective parts to be formed from, such that each region corresponds to a different part;
controls the material element identification marking system to perform a marking operation configured to apply an identifier to each region.

13. A method as claimed in claim 10 or claim 11 wherein the material processing system comprises:
a material cutting tool;
a part finishing tool, and
in dependence of the part request instruction, the control system:
controls the part finishing tool to perform a finishing operation on the or each part;
controls the material cutting tool to perform a cutting operation configured to cut the or each part from the material element so that the respective identifier is present on the respective part.

14. A method as claimed in claim 13 wherein the material processing system comprises:
a material element delivery system;
a marking station, wherein the material element identification marking system is located at the marking station;
a cutting station, wherein the cutting tool is provided at the cutting station; a finishing station, wherein the part finishing tool is provided at the finishing station; and
a material element transport system; and
a part transport system;
wherein the method comprises the step of the control system controlling the material element transport system to:
move the material element from the material element delivery system to the marking station;
move the material element from the marking station to the cutting station; and
the method comprises the step of the control system controlling the part transport system to move the or each part cut from the material element to the finishing station.

15. A method as claimed in any one of claims 12 to 14 wherein the material element delivery system is configured to store a plurality of material elements at the same time;
the method comprising the step of, in dependence of the part request instruction, the control system determining which material element of the plurality of material elements to be used to produce the or each part.
